# EUROPEAN PATENT APPLICATION

(11) **EP 2 070 772 A1**
(43) Date of publication of application: **17.06.2009**
(21) Application number: 08704147.1
(22) Date of filing: 30.01.2008
(51) Int. Cl.: B60R 16/02, B65D 63/14, H02G 3/30

(54) **HARNESS CLIP STRUCTURE**

(30) Priority: 31.01.2007 JP 2007021065
(71) Applicant: Calsonic Kansei Corporation, Saitama-shi Saitama 331-8501 (JP); Hellermann Tyton Co., Ltd., Tokyo 150-0012 (JP)
(72) Inventor: INOMATA, Takuma, Saitama-shi, Saitama 3318501 (JP); OOSAWA, Kazumi, Saitama-shi, Saitama 3318501 (JP); SHIMIZU, Futoshi, Tokyo 150-0012 (JP); OIKE, Hideki, Tokyo 150-0012 (JP); NAGAI, Hiroyoshi, Tokyo 150-0012 (JP)
(74) Representative: Köhler, Walter
(86) International application number: PCT/JP2008/051365
(87) International publication number: WO 2008/093705

(57) **Abstract**

A clip body (11) of a harness clip member (10) is provided with a stem (14) which integrally projects from a lower face of an umbrella-like flange (13), and a pair of left and right elastic locking pieces (15, 15) formed on a tip end of the stem (14). A band connecting section (16) including a gate-like frame member where the band member (12) is inserted through has a pair of left and right side parts (16a, 16b), and an upper part (16c) which connects the side parts (16a, 16b). In one of the side parts (16b), wedge-like notches (16d, 16d) are formed at a symmetric position where tip ends (16e, 16e) are opposed to each other such that lateral widthwise direction size of the side part (16b) is reduced. A narrow weak section (19) is provided between these tip ends (16e, 16e).

## Description

### Technical Field

The present invention relates to a harness clip structure which is mainly used for fixing a wire harness used for an automobile and which can easily be dismantled.

### Background Art

Conventionally, a harness clip structure as shown in FIGs. 17 and 18 is known (see Japanese Patent Application Laid-open No. 2001-84843, in particular, paragraphs 0010 to 0018 and FIG. 3).

First, a structure of the conventional harness clip structure will be described. In the conventional harness clip structure, a steering member 1 extending along a widthwise direction of a vehicle is provided in an instrument panel mounted in front of a driver's seat of the vehicle.

A wire harness member 2 extends in the instrument panel along a longitudinal direction of the steering member 1.

In the wire harness member 2, a plurality of harness clip members 3 is used. The wire harness member 2 is fixed to a vehicle body-side fixing hole 5 provided on a vehicle body-side panel member 4 or the steering member 1 at a plurality of locations.

The harness clip member 2 mainly includes long bands 3a and 3a wound around and tied to the wire harness member 2, a stem 3b inserted through vehicle body-side fixing holes 5 and 5 and fixed thereto so as to be incapable of being pulled out from the holes, thereby mounting the wire harness member 2 on the vehicle body side, and a pair of locking blades 3f and 3f projecting from tip end of the stem 3b such that the locking blades 3f and 3f can be elastically deformed.

A plate-like mounting plate body 3c is integrally formed on the stem 3b of the harness clip member 2, the bands 3a and 3a are used and the mounting plate body 3c is tied to a main trunk 2a of the wire harness member 2.

Next, actions of this conventional harness clip structure will be described.

In the conventional harness clip structure having the structure as described above, when the vehicle is assembled, the bands 3a and 3a are used, the stem 3b tied to the main trunk 2a of the wire harness member 2 is inserted into and fixed to the vehicle body-side fixing hole 5, thereby mounting the wire harness member 2 on the vehicle body side.

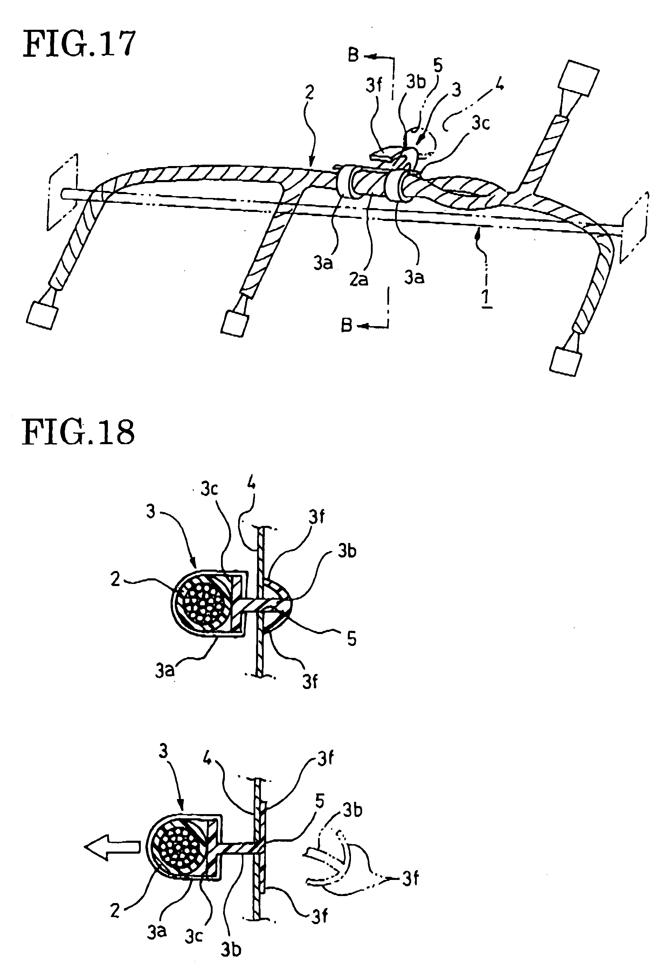

When the vehicle is dismantled, a part of the wire harness member 2 such as the main trunk 2a is hooked using a hooking member or the like, and the portion is separated from the vehicle body-side panel member 4 and the like as shown with a two-dot chain line in FIG. 18.

The stem 3b is ruptured or the locking blades 3f and 3f are broken, and the wire harness member 2 is separated from the vehicle body-side panel member 4 and the like.

FIG 19 shows another conventional harness clip structure (see Japanese Patent Application Laid-open No. H11-215667, in particular, paragraphs 0010 to 0017 and FIG. 2).

According to this harness clip structure, a fitting hole 3d is formed in an upper portion of the stem 3b, and an engagement projection 3e which is fitted into the fitting hole 3d is integrally formed on the band 3a.

According to this conventional harness clip structure having such a structure as described above, when the vehicle is dismantled, the engagement projection 3e is detached from the fitting hole 3d, and the wire harness member 2 can easily be separated from the vehicle body-side panel member 4 and the like.

J FIG 20 shows still another conventional harness clip structure (see Japanese Patent Application Laid-open No. H11-205967, in particular, paragraphs 0010 to 0016 and FIG. 1).

According to this harness clip structure, a mounting plate body 3c formed on an upper portion of a stem 3b is locked to a peripheral edge of a back portion 3i of an incision groove 3h formed in a band 3g, and the band 3g and a pair of locking blades 3f and 3f projecting from a tip end of the stem 3b so as to be able to be elastically deformed are integrally formed as one piece, so that a wire harness member 2 bundled by the band 3g is fixed to the vehicle body-side panel member 4.

According to this conventional harness clip structure having such a structure as described above, when the vehicle is dismantled, the engagement projection stem 3b is detached from the incision groove 3h, and the lock by the mounting plate body 3c is released, such that the wire harness member 2 can easily be separated from the vehicle body-side panel member 4 and the like.

### Disclosure of the Invention

### Problem to be Solved by the Invention

According to the conventional harness clip structures as described above, however, when a vehicle is dismantled, as indicated by a two-dot chain line in FIG. 18, the stem 3b is ruptured or the locking blades 3f and 3f are broken depending upon balance between a size of the vehicle body-side fixing hole 5 and the strengths of the stem 3b and the locking blades 3f and 3f, and the wire harness member 2 is separated from the vehicle body-side panel member 4 and the like.

Therefore, the locking blades 3f and 3f which arc liable to be ruptured from the stem 3b drop on a side of a back surface of the vehicle body-side panel member 4 or remains in a hollow portion of the steering member 1.

According to the conventional harness clip structures, when the vehicle is dismantled, if the direction in which the engagement projection 3e is detached from the fitting hole 3d is not vertical but diagonal, the pulling-out force is not effectively applied, and the wire harness member 2 is liable to be incapable of being easily separated.

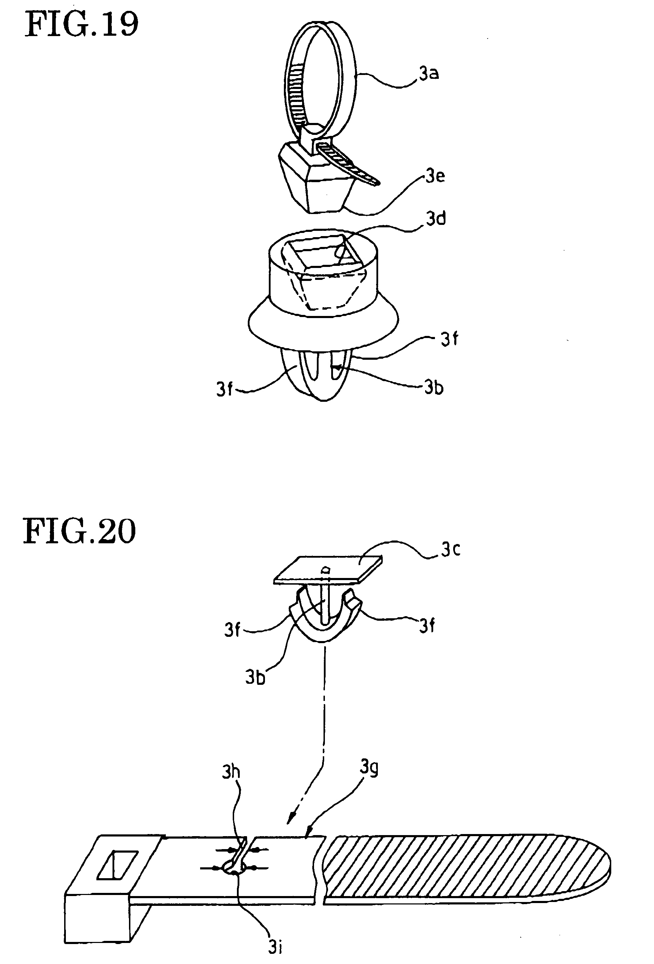

In particular, according to the conventional harness clip structure shown in FIG. 20, a force required for detaching the stem 3b from the incision groove 3h is largely different from the opening direction of the incision groove 3h and the direction of the back portion 3i located in the opposite direction.

Therefore, there is a problem that it is difficult to obtain a desired dismantling performance.

Hence, it is an object of the present invention to provide a harness clip structure that can easily be dismantled irrespective of the direction on which the pulling-out force acts.

### Means for Solving the Problem

To achieve the above object, an embodiment of the present invention provides a harness clip structure comprising a long flexible band which is wound around and tied to a wire harness, and a stem which is inserted through a vehicle body-side fixing hole and which mounts the wire harness on a vehicle body side, wherein the harness clip structure further includes a gate-like band connecting section which is integrally provided on the stem and through which the band is inserted, and a weak section is formed on at least a part of the band connecting section.

### Brief Description of the Drawings

FIG 1 is an exploded perspective view illustrating a manner that a frame member is ruptured and a clip body and a band member are separated from each other in a harness clip structure of the best mode for carrying out the invention;
FIG. 2 is a side view of the clip body in the harness clip structure of an embodiment;
FIG. 3 is a perspective view of the clip body in the harness clip structure of the embodiment;
FIG. 4 is a front view of the clip body in the harness clip structure of the embodiment;
FIG 5 is a front view illustrating the entire structure in which a harness clip is mounted on a wire harness member in the harness clip structure of the embodiment;
FIG. 6 is a sectional view illustrating the entire structure in which the harness clip is mounted on the wire harness member in the harness clip structure of the embodiment taken along a line A-A in Fig. 5;
FIG 7 is a perspective view of the clip body in the harness clip structure of an example 1 of the embodiment;
FIG 8 is a perspective view of a clip body in a harness clip structure of an example 2 of the embodiment;
FIG 9 is a front view of the clip body in the harness clip structure of the example 2 of the embodiment;
FIG 10 is a top plan view of the harness clip in the harness clip structure of the example 2 of the embodiment;
FIG 11 is a perspective view of a clip body in a harness clip structure of an example 3 of the embodiment;
FIG. 12 is a front view of a harness clip in a harness clip structure of the example 3 of the embodiment;
Fig. 13 is a top plan view of the harness clip in the harness clip structure of the example 3 of the embodiment;
FIG. 14 is a perspective view of a clip body in a harness clip structure of an example 4 of the embodiment;
Fig. 15 is a front view of the clip body in the harness clip structure of the example 4 of the embodiment;
FIG 16 is a top plan view of the clip body in the harness clip structure of the example 4 of the embodiment;
FIG. 17 is a perspective view illustrating the entire structure in which a harness clip is mounted on a wire harness member in a conventional harness clip structure;
FIG 18 is a sectional view taken along a line B-B in FIG. 17 illustrating a manner that the conventional harness clip structure is dismantled from a state where the wire harness member is mounted on a vehicle body panel member using the harness clip member;
FIG 19 is an exploded perspective view illustrating another conventional harness clip structure; and
FIG 20 is an exploded perspective view illustrating still another conventional harness clip structure.

### Best Mode for Carrying Out the Invention

Next, the best mode of a harness clip structure of the present invention will be described in detail with reference to the accompanying drawings.

In an embodiment and examples described below, the same members as those of the conventional techniques are assigned the same reference numerals.

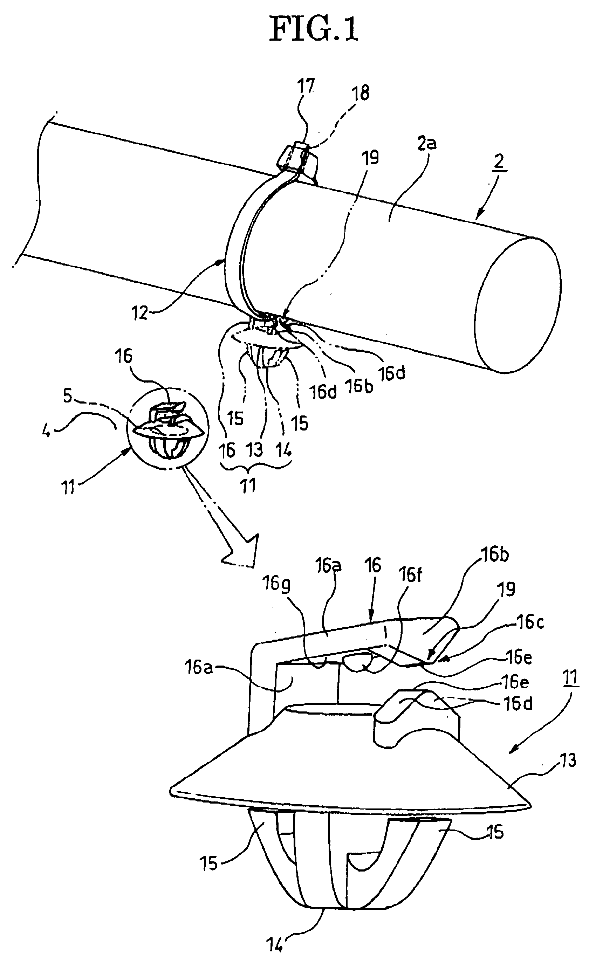

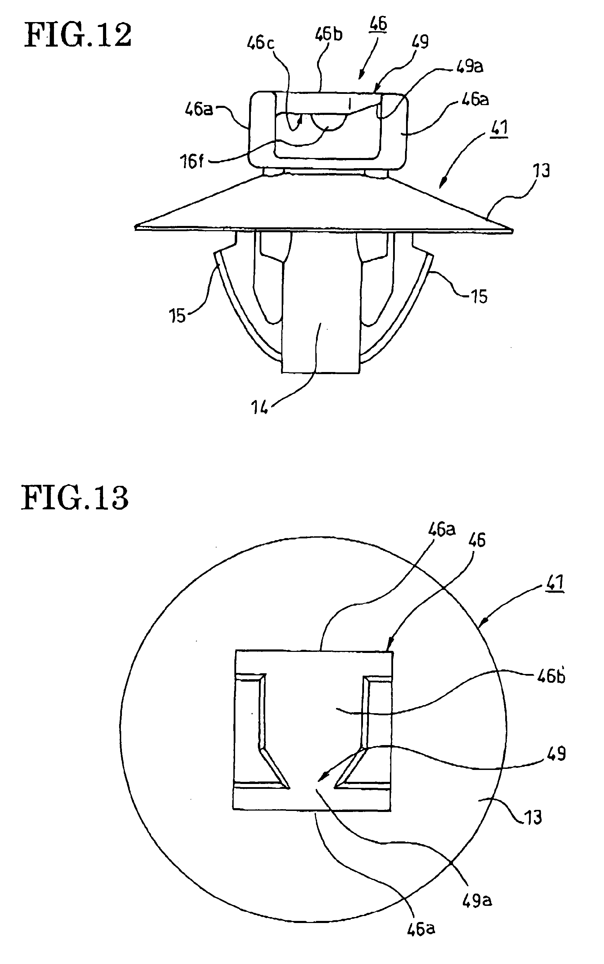

FIGs. 1 to 16 show a harness clip structure according to an embodiment for carrying out the invention.

First, the entire structure will be described. According to the harness clip structure of the embodiment, a steering member extending along a widthwise direction of a vehicle is provided in an instrument panel (not shown) mounted in front of a driver's seat of the vehicle.

A wire harness member 2 extends in the instrument panel along the longitudinal direction of the steering member.

A plurality of harness clip members 10 are used in the wire harness member 2, and the wire harness member 2 is fixed to a vehicle body-side fixing hole 5 formed in the vehicle body-side panel member 4 or the steering member at a plurality of locations of the wire harness member 2.

The harness clip member 10 includes a clip body 11 and a band member 12 as a band.

The clip body 11 is provided with a stem 14 which integrally projects from a lower face of an umbrella-like flange 13, and a pair of left and right elastic locking pieces 15 and 15 formed on a tip end of the stem 14.

A band connecting section 16 comprising a gate-like frame member is provided on an upper side of the flange 13 of the clip body 11 such that the band connecting section 16 is integrally formed on the stem 14 through the flange 13. The band connecting section 16 is inserted through the band member 12.

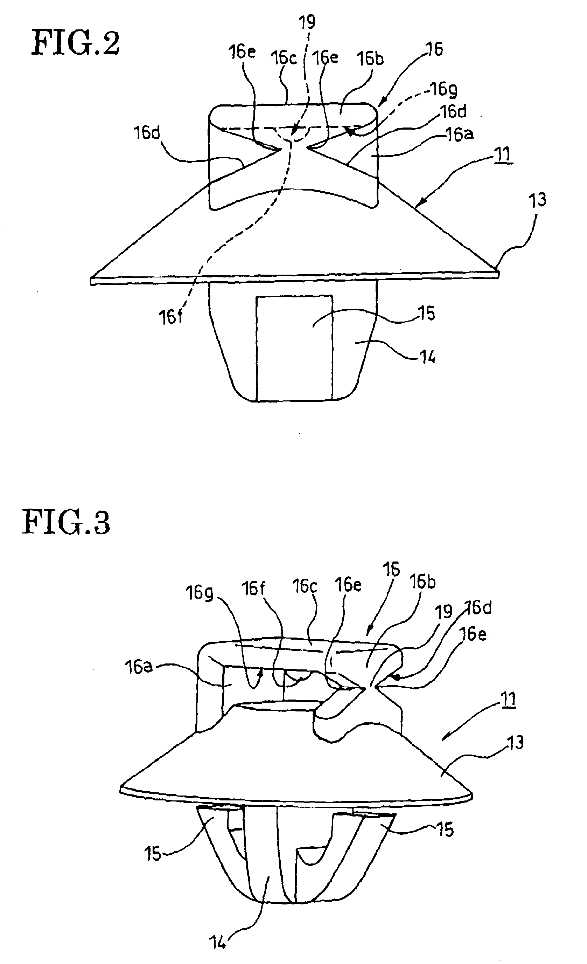

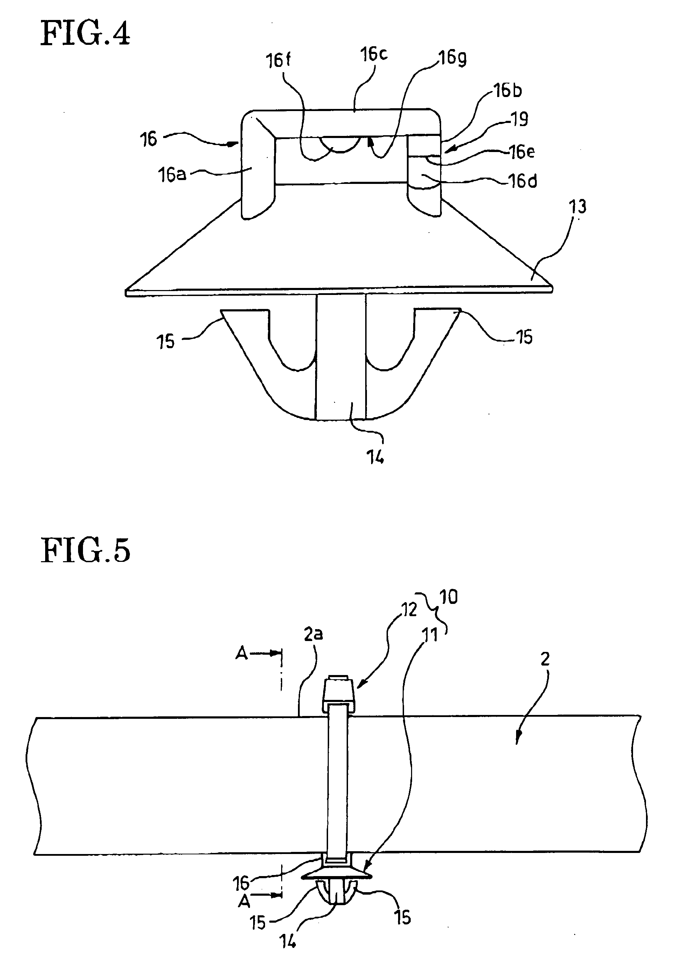

As shown in FIGs. 3 and 4, the band connecting section 16 includes a pair of left and right side parts 16a and 16b, and an upper part 16 which connects the side parts 16a and 16b. The band connecting section 16 is provided with a frame member which surrounds an opening 16g through which the band member 12 is inserted.

In this configuration, one of the side parts 16b is formed with wedge-like notches 16d and 16d at a symmetric position where tip ends 16e and 16e are opposed to each other such that lateral widthwise direction size of the side part 16b is reduced. A narrow weak section 19 is provided between the tip ends 16e and 16e.

In this embodiment, a semi-spherical band sliding part 16f integrally formed to project from an inner face of the upper part 16c.

The band member 12 in the embodiment has a band body 17 arranged such that a plurality of engagement grooves 17a intersecting orthogonally with the band body 17 in the longitudinal direction.

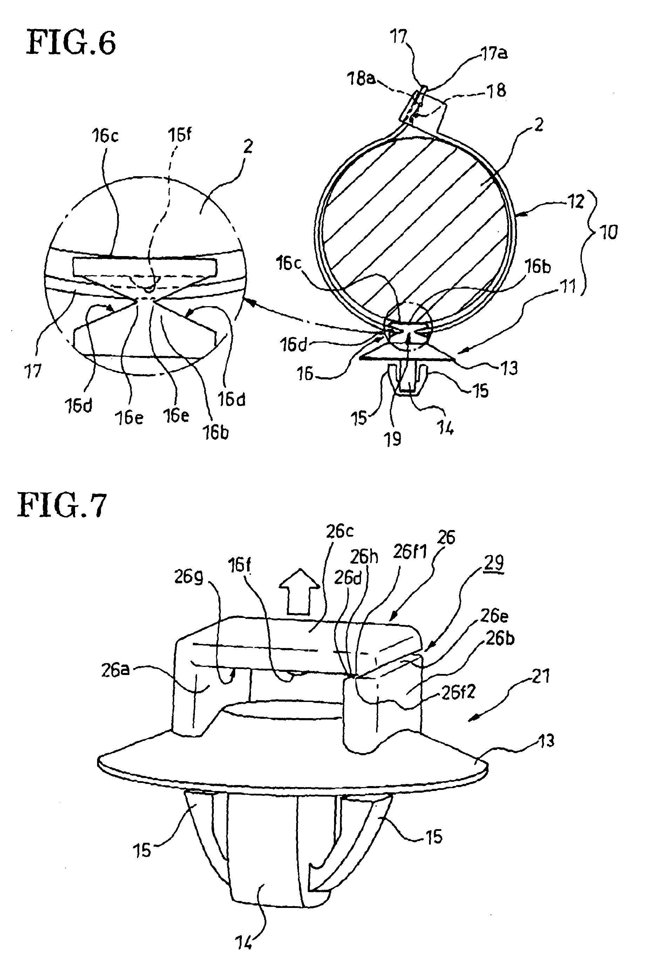

As shown in FIG. 6, the band body 17 is provided at its one end with an engagement hole 18. The band body 17 is inserted through the engagement hole 18 and a locking pawl 18a formed on an inner face is locked to one of the engagement grooves 17a, thereby limiting a movement in the pulling-out direction.

Next, function and effect of the harness clip structure of the above embodiment will be described.

According to this harness clip structure, the band body 17 of the band member 12 is inserted through the opening 16g formed in the band connecting section 16 of the clip body 11, the band body 17 is wound around the wire harness member 2 as shown in FIG. 5 or 6, and the tip end of the band body 17 is inserted through the engagement hole 18 formed in the one end.

At this time, the band body 17 is slidable in the longitudinal direction with respect to the opening 16g of the band connecting section 16. Therefore, as shown in FIG. 6, the engagement groove 17a of the inserted band body 17 is locked by the locking pawl 18a of the engagement hole 18 at a location opposite to the clip body 11 with respect to the wire harness member 2, and the wire harness member 2 can be bundled.

A bundling operation by the engagement hole 18 can be carried out at an arbitrary position on a circumference of the wire harness member 2. Therefore, an excellent operability can be obtained irrespective of a mounting location of the wire harness member 2.

Further, in this embodiment, the semi-spherical band sliding part 16f which is integrally formed to project from the inner face of the upper part 16c is in contact with an inner face of the band body 17 as shown in FIG 6, a smooth sliding movement is enabled.

As shown in FIG 1, the stem 14 is inserted into the fixing hole 5 formed in the vehicle body-side panel member 4, the elastic locking pieces 15 and 15 are locked to a peripheral edge of the fixing hole 5, and the vehicle body-side panel member 4 is nipped between the flange 13 and the tip ends of the elastic locking pieces 15 and 15.

Therefore, when the vehicle is assembled, it is possible to easily mount the wire harness member 2 on a desired position of the vehicle body-side panel member 4.

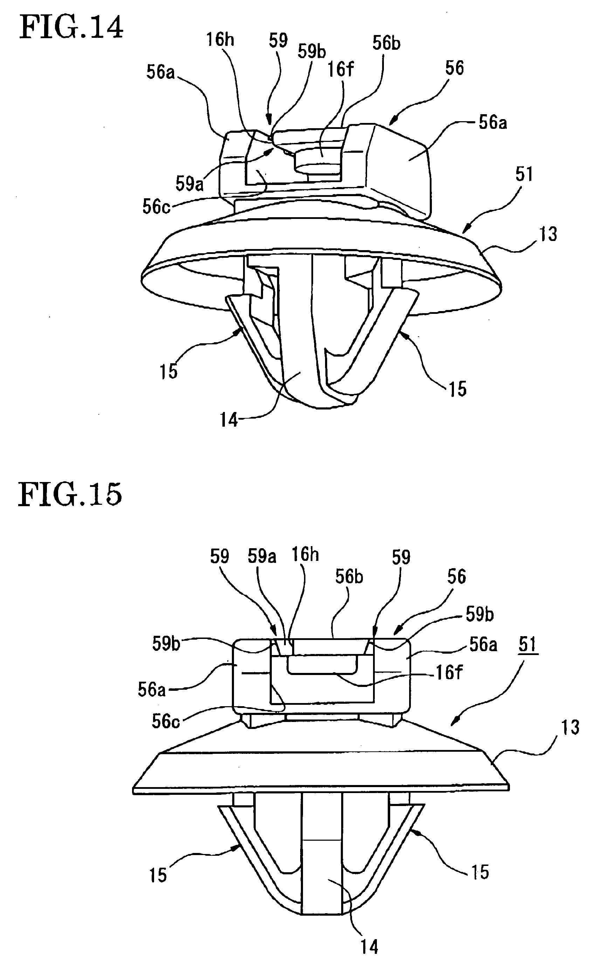

Next, when the vehicle is dismantled, like a conventional technique shown in FIG. 14, a part of the wire harness member 2 such as the main trunk 2a is hooked on a hook member or the like, and the entire wire harness member 2 can be separated from the vehicle body-side panel member 4 and the like.

In this case, a narrow portion as the weak section 19 formed between the tip ends 16e and 16e of the notches 16d and 16d on the side part 16b of the band connecting section 16 is broken as indicated by a solid line in FIG 1 by a force separating the wire harness member 2 from the vehicle body.

The band body 17 is, thus, separated from the opening 16g, and the band member 12 and the clip body 11 provided with the stem 14 can easily be separated from each other.

A force applied to the weak section 19 between the tip ends 16e and 16e, in a case where the wire harness member 2 is pulled out, even if the force is applied from any directions to the weak section 19, always acts as a force which ruptures the weak section 19. Therefore, it is possible to easily break the band connecting section 16 at the weak section 19.

Therefore, the structure can easily be dismantled by a simple dismantling operation, i.e., by hooking the wire harness member 2 using a hook or the like and lifting up the wire harness member 2.

The stem 14 reliably remains in a state where the stem 14 is inserted through the fixing hole 5 of the vehicle body-side panel member 4 without dropping off unlike the conventional technique.

This allows reduction of labor such as searching of remaining parts, which also achieves an excellent dismantling performance.

The weak section 19 can easily be configured only by forming the pair of wedge-like notches 16d and 16d so as to be opposed in the side part 16b and the tip ends 16e and 16e arc made close to each other. Therefore, the number of parts is not increased and the structure does not become complicated.

It is only necessary that the band member can be inserted through the opening 16g. Thus, a general band member can be used.

Therefore, it is possible to restrain the manufacturing cost from increasing.

### Examples

### (Example 1)

Next, examples for carrying out the aforementioned embodiment will be described. Fig. 7 shows a harness clip structure of an example 1, which is a concrete example of the embodiment of the invention.

The same members as those of the embodiment are assigned with the same reference numerals, and different portions will be described mainly.

A band connecting section 26 provided with a weak section 29 is integrally formed on a clip body 21 comprising the harness clip of the example 1.

As shown in FIG 7, the band connecting section 26 includes a pair of left and right side parts 26a and 26b, and an upper part 26c connecting the side parts 26a and 26b. A gate-like frame member is configured such as to surround an opening 26g through which the band member 12 is inserted.

The weak section 29 is located at a connecting portion between the side part 16b and the upper part 26c. The weak section 29 has a wedge-like inner notch 26d and an outer notch 26e, and tip ends 26f1 and 26f2 are notched up to a position where the tip ends 26f1 and 26f2 are superposed on each other as viewed from above such that a size of the weak section 29 in the thickness direction of the side part 16b is small, thereby forming a thin section 26h which is located diagonally.

Next, function and effect of the example 1 will be described.

According to the harness clip structure of the example 1 having the structure described above, if a force separating the wire harness member 2 from the vehicle body is applied to a direction of an outlined arrow in FIG. 7, a diagonal direction or a perpendicular direction to the direction of the outlined arrow, the thin section 26h is stretched and ruptured.

The band body 17 is disengaged from inside the opening 26g, and the band member 12 and the clip body 21 provided with the stem 14 can easily be separated from each other.

A force applied to the weak section 29 comprising the thin section 26h between the tip ends 26f1 and 26f2, in a case where the wire harness member 2 is pulled out, even if the force is applied from any directions to the weak section 29, always acts as a force which ruptures the weak section 29. Therefore, it is possible to easily break the band connecting section 26 at the weak section 29.

Therefore, the structure can easily be dismantled by a simple dismantling operation, i.e., by hooking the wire harness member 2 using a hook or the like and lifting up the wire harness member 2.

Since other structure and the function and effect are almost the same as those of the embodiment, description thereof will not be repeated here.

### (Example 2)

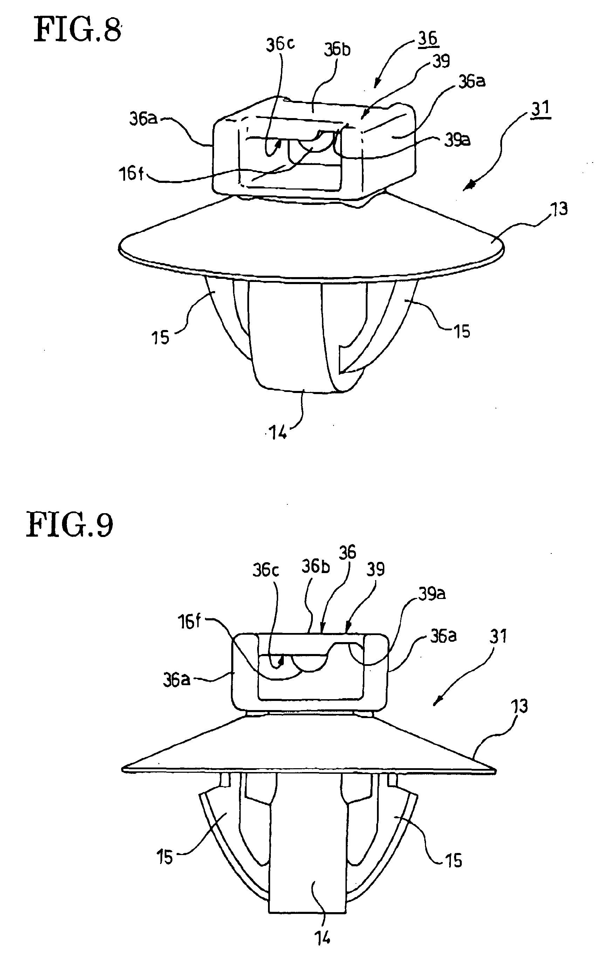

FIGs. 8 to 10 show a harness clip structure of an example 2 of the invention.

The same members as those of the embodiment are assigned with the same reference numerals, and different portions will be described mainly.

A band connecting section 36 provided with a weak section 39 is integrally formed on a clip body 31 comprising the harness clip of the example 2.

As shown in FIG 8, the band connecting section 36 includes a pair of left and right side parts 36a and 36a, and an upper side 36b which connects the side parts 36a and 36a and which is narrower than the side parts 36a and 36a, and a substantially gate-like frame member is configured such as to surround an opening 36c through which the band member 12 is inserted.

The upper part 36b is provided with a weak section 39 located at a connecting portion near the side part 36a.

An inner face of the weak section 39 is recessed, a thickness in inner and outer direction of the face which are the vertical direction is set smaller than a thickness size of the other upper part, thereby forming the frame-shaped thin section 39a.

Next, function and effect of the example 2 will be described.

According to the harness clip structure of the example 2, if a force separating the wire harness member 2 from the vehicle body is applied in any directions, stress is concentrated on the thin section 39a formed in the upper part 36b as a narrow portion, and this portion is ruptured.

Thus, the band body 17 is disengaged from the opening 36c, and the band member 12 and the clip body 31 provided with the stem 14 can easily be separated.

Since other structure and the function and effect are almost the same as those of the example 1, description thereof will not be repeated here.

### (Example 3)

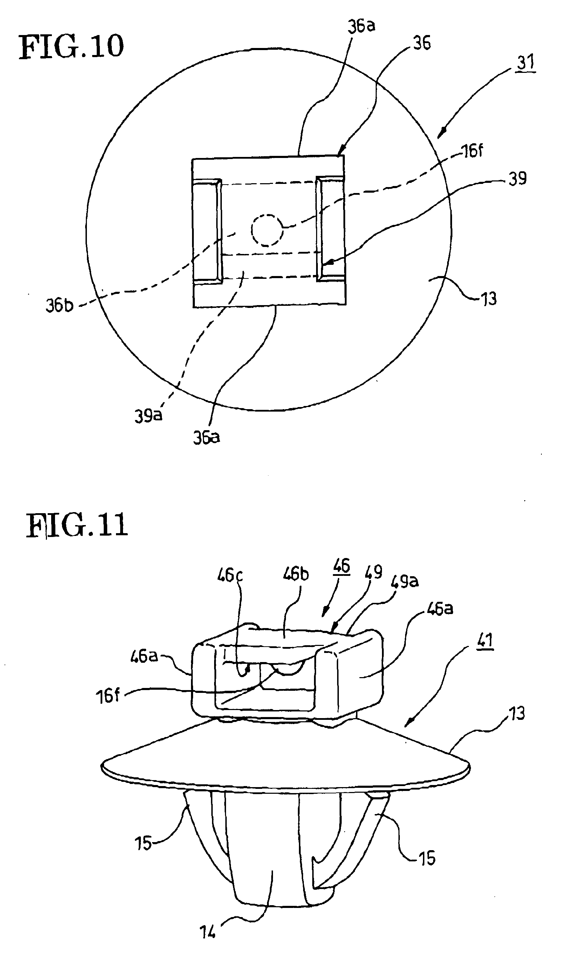

FIGs. 11 to 13 show a harness clip structure of an example 3 of the invention.

The same members as those of the embodiment are assigned with the same reference numerals, and different portions will be described mainly.

A band connecting section 46 provided with a weak section 49 is integrally formed on a clip body 41 comprising the harness clip of the example 3.

As shown in FIG 11, the band connecting section 46 includes a pair of left and right side parts 46a and 46a, and an upper part 46b which connects the side parts 46a and 46a and which is narrower than the side parts 46a and 46a, and a substantially gate-like frame member is configured such as to surround an opening 46c through which the band member 12 is inserted.

The upper part 46b is provided with the weak section 49 whose cross section is gradually reduced toward a connecting portion near one of the side parts 46a.

The weak section 49 includes a diameter-reducing section 49a which is reduced in thickness and width toward the side part 46a from a position of the upper part 46b near the side part 46a.

Next, function and effect of the example 3 will be described.

According to the harness clip structure of the example 4, if a force separating the wire harness member 2 from the vehicle body is applied in any directions, stress is concentrated on the diameter-reducing section 49a, and the frame member is ruptured from the position where the diameter-reducing section 49a is formed.

Therefore, the band body 17 is disengaged from the opening 46c and the band member 12 and the clip body 41 provided with the stem 14 can easily be separated from each other.

Since other structure and the function and effect are almost the same as those of the embodiment and the examples 1 and 2, description thereof will not be repeated here.

### (Example 4)

FIGs. 14 to 16 show a harness clip structure of an example 4 of the invention.

The same members as those of the embodiment and the examples 1 to 3 are assigned with the same reference numerals, and different portions will be described mainly.

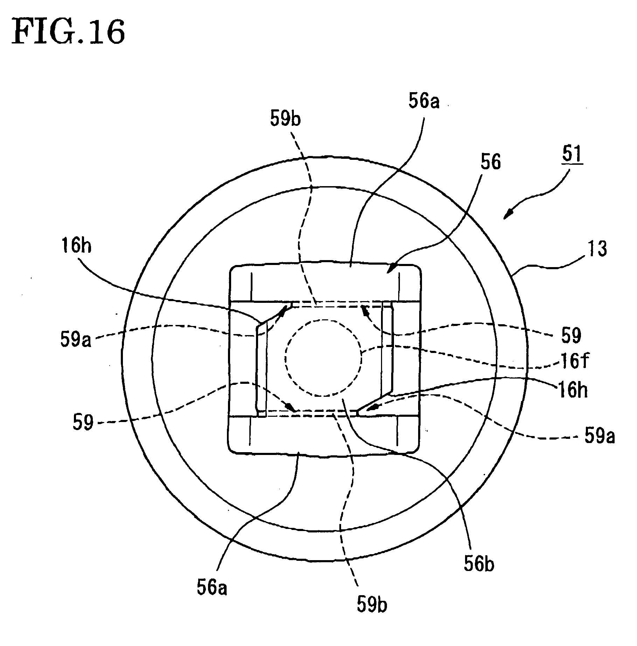

A clip body 51 comprises the harness clip of the example 4. As shown in FIG. 16, the clip body 51 is provided with a pair of weak sections 59 and 59 on diagonal lines as viewed from above on the band connecting section 56.

That is, the band connecting section 56 of the clip body 51 of the example 4 includes a pair of left and right side parts 56a and 56a, and an upper part 56b which connects the side parts 56a and 56a and which is narrower than the side parts 56a and 56a. A substantially gate-like frame member is configured such as to surround an opening 56c through which the band member 12 is inserted.

The upper part 56b is provided with the weak sections 59 and 59 whose cross sections are gradually reduced toward a connecting portion near the side parts 56a and 56a.

The weak sections 59 and 59 are formed with a pair of notches 59a and 59a located on diagonal lines along the side parts 56a and 56a of the upper part 56b such that wedge-like tip ends are oriented in opposite directions.

Thin sections 59b and 59b are continuously formed from wedge-like tip ends of the notches 59a and 59 and at both ends of the upper part 56b in the weak sections 59 and 59. The thin sections 59 and 59 are formed such that a lower surface side of the upper part 56b are scraped and a thickness of the thin sections 59 and 59 are thinner than that of the upper part 56b.

Next, function and effect of the example 4 will be described.

According to the harness clip member of the example 4, as shown in FIG 16, the weak sections 59 and 59 formed in the band connecting section 56 of the clip body 51 have the pair of notches 59a and 59a located on the diagonal lines as viewed from above on the upper part 56b having the band connecting section 56.

The thin sections 59b and 59b of the weak sections 59 and 59 of the example 4 arc continuously formed from the wedge-like tip ends of the notches 56a and 56a. Therefore, a force in the direction spreading and opening the notches 56a and 56a is concentrated on the thin sections 59b from the wedge-like tip ends, and the structure can easily be ruptured.

Further, the notches 56a and 56a are formed such that the tip ends are oriented in the opposite directions.

Therefore, even if one of the weak sections 59 and 59 is not easily ruptured by the force separating the wire harness member 2 from the vehicle body, the other weak section 59 located on the opposite side on the diagonal line is ruptured, and the band member 12 and the clip body 51 provided with the stem 14 can easily be separated from each other.

Therefore, a freedom degree of directional property of the clip body 51 when the wire harness member 2 is fixed can be enhanced, and an assembling operation can be carried out easily.
More specifically, the upper part 56b facing the notches 56a and 56a is rolled up. That is, a force in a pulling-up direction applied from the band body 17 is applied, in advance, to corners 16h and 16h formed with the notches 56a and 56a of the upper part 56b in FIG. 16.
The pulling-up force from the band body 17 is firstly applied to the corresponding corner 16h of the upper part 56b facing one of the notches 56a. Therefore, this corner 16h is rolled up upward from below while deforming such that the upper face 56b is lifted.
Therefore, a spreading and opening force in the pulling-up direction is intensively applied from a position close to the corner 16h of the thin section 59b of one of the notches 56a, and the structure can easily be ruptured.

Since other structure and the function and effect are almost the same as those of the embodiment and the examples 1 to 3, description thereof will not be repeated here.

The embodiment and the examples of the present invention have been described above in detail with reference to the drawings. However, the invention is not limited to the embodiment and the examples, and design modifications in a range not departing from the subject matter of the invention are included in the invention.

That is, although the pair of left and right elastic locking pieces 15 and 15 arc integrally formed on the stem 14, the invention is not limited to this, a plurality of stages of elastic locking pieces 15 may be integrally formed along the axial direction of the stem 14, and the shape, the number and material of the stem 14 and the elastic locking pieces 15 are not especially limited.

## Claims

1. A harness clip structure comprising:
a long flexible band which is wound around and tied to a wire harness; and
a stem which is inserted through a vehicle body-side fixing hole and which mounts the wire harness on a vehicle body side, wherein the harness clip structure further includes a gate-like band connecting section which is integrally provided on the stem and through which the band is inserted, and a weak section is formed on at least a part of the band connecting section.

2. The harness clip structure according to claim 1, wherein the weak section includes an incision formed in a frame member comprising the band connecting section.

3. The harness clip structure according to claim 1, wherein the weak section includes a thin section formed on a frame member comprising the band connecting section.

4. The harness clip structure according to claim 2, wherein the weak section includes a thin section formed on the frame member comprising the band connecting section.

5. The harness clip structure according to claim 1, wherein the weak section includes a narrow portion formed on a frame member of the band connecting section.

6. The harness clip structure according to claim 1, wherein a part of a frame member of the weak section of the band connecting section includes a thin and narrow diameter-reducing section.

7. The harness clip structure according to claim 1, wherein the weak section is located on a diagonal line as viewed from above the band connecting section.
